# EUROPEAN PATENT APPLICATION

(11) **EP 3 689 640 A1**
(43) Date of publication of application: **05.08.2020**
(21) Application number: 19020365.3
(22) Date of filing: 06.06.2019
(51) Int. Cl.: B60C 11/00

(54) **TIRE FOR HIGH PERFORMANCE VEHICLES AND MOTORCYCLES, WITH IMPROVED LAYERED TREAD**

(30) Priority: 31.01.2019 IT 201900000333 U
(71) Applicant: Baroffio, Raffaele, 20025 Legnano (MI) (IT)
(72) Inventor: Baroffio, Raffaele, 20025 Legnano (MI) (IT)
(74) Representative: Lecce, Giovanni

(57) **Abstract**

A tire (10) for racing vehicles and motorcycles comprising a carcass structure, a belt structure applied in radially external position with respect to said carcass structure and a tread band (7) in radially external position to said belt structure. The tread band (7) comprises at least one first circumferential layer (11), in radially external position, made of a first elastomeric composition, at least one second circumferential layer (12), in radially internal position, made of a second elastomeric composition, and a third circumferential layer (13), placed in intermediate position between said at least one first layer (11) and said at least one second layer (12), made of a third elastomeric composition. The first elastomeric composition has a higher modulus of elasticity than the modulus of elasticity of the second elastomeric composition.

## Description

The present finding refers to a high performance tire for racing vehicles and motorcycles.

For the purpose of the present description, the term "elastomeric material" means a composition comprising at least one elastomeric polymer and at least one reinforcing charge. Preferably, such composition also includes additives such as, for example, a cross-linking agent and/or a plasticizer. Due to the presence of the cross-linking agent, this material can be cross-linked by heating to form the end product.

The terms "radial" and "axial" and the expressions "radially internal/external" and "axially internal/external" are used with reference to the radial direction of the forming tire/drum used (i.e. a direction perpendicular to the axis of rotation of the above forming tire/drum) and to the axial direction of the forming tire/drum (i.e. a direction parallel to the axis of rotation of the above forming tire/drum).

The terms "circumferential" and "circumferentially" are instead used with reference to the annular development of the above forming tire/drum.

In Formula 1, the tires used are of different types depending on the course and weather conditions and undergo wear that slows down the speed of the vehicle and requires one or more tire changes to reduce the final time.

Moreover, the occurrence of accidents, which can involve both vehicles and people present in the above equipped spaces and in the areas adjacent to them, is not infrequent.

The object of the present finding is to remedy the drawbacks described above.

More specifically, the object of the present finding is to provide a tire with an improved tread, which allows a reduction in the number of tires needed to complete a course, with a reduction in costs.

Another object of the present finding is to provide a tire such as to result in a reduction in costs incurred in the supply of tires, during a car or motorcycle racing competition.

These and other objects are achieved by the tire of the present finding in accordance with the independent claim.

The constructive and functional characteristics of the tire of the present finding can be better understood by the detailed description that follows, in which reference is made to the attached tables of drawings which represent a preferred and not restrictive embodiment wherein:
- figure 1 schematically represents, in simplified view and in radial section, a tire according to an embodiment of the present finding; and
- figure 2 is a view of an enlarged part of the tire in figure 1.

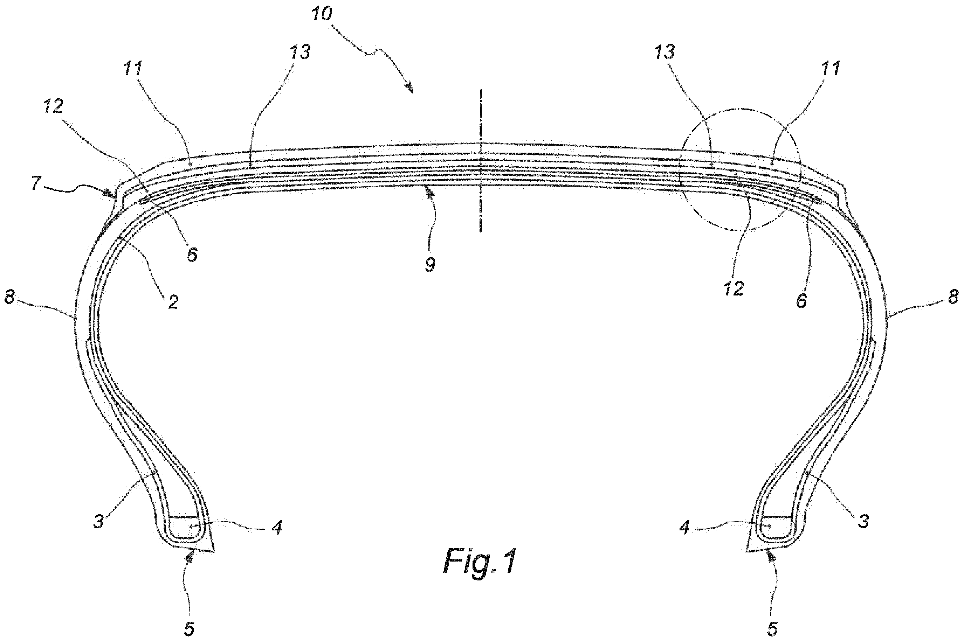

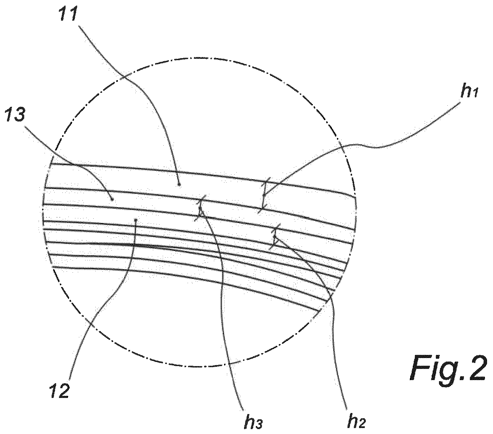

With reference to figures 1 and 2, the tire of the present finding is indicated in its entirety by 10 and generally includes a carcass structure, comprising at least one carcass ply 2 with end flaps 3 respectively opposite and engaged in their respective annular anchoring structures 4, integrated in the areas usually identified with the name of "beads" 5.

The carcass structure is associated with a belt structure comprising one or more layers of belt 6, overlapping radially with respect to each other and with respect to the carcass ply 2, having textile or metal reinforcing cords. These reinforcing cords may be oriented crosswise with respect to a direction of circumferential extension of the tire 10. Preferably such reinforcing cords are textile.

In addition, the belt structure may include at least one layer of reinforcement radially outside the belt layers 6 (not shown in the illustration). The radially external reinforcement layer may include textile or metal cords, arranged at a substantially zero angle to the direction of the tire's circumferential extension and immersed in the elastomeric material. Preferably, the cords are of the textile type and are arranged substantially parallel and side by side to form a plurality of coils. Such coils are substantially oriented according to the direction of circumferential extension of the tire (typically with an angle between 0° and 5° with respect to such direction).

In a radial position outside the belt structure, an elastomeric tread strip 7 is applied.

On the lateral surfaces of the carcass structure, each extending from one of the lateral edges of the tread strip 7 to the respective annular anchoring structure 4 to the beads 5, respective sides 8 in elastomeric material are also applied in axially external position.

Furthermore, a radial inner surface of the tire 10 can be covered with a layer of elastomeric material, which is substantially impermeable to air, or so-called liner 9.

The manufacturing of the tire 10 as described above is done by assembling the respective semi-finished products on a forming drum, not shown, by means of at least one assembly device.

At least one part of the components intended to form the carcass structure of the tire 10 is manufactured and/or assembled on the forming drum; more in particular, the forming drum is suitable for receiving first of all any liner 9, and then one or more carcass plies 2.

The belt structure and the tread strip 7 may be made either in succession, directly on the previously laid carcass ply 2, or in a separate working stage, by creating a cylindrical sleeve which includes them. In such case, the sleeve is then placed in a coaxial position centered around the carcass structure, which is then radially expanded, so as to determine its application against a radially internal surface of the sleeve.

Following the manufacturing of the raw tire 10, according to the methods described above, a molding and vulcanization treatment is carried out in order to determine the structural stabilization of the tire 10 by cross-linking the elastomeric compounds and, if necessary, to impress on the tread strip 7 a desired tread pattern and/or any distinctive graphic marks at the sides 8.

Preferably, the tire 10 is designed to be mounted on high performance vehicles or motorcycles, even more so on vehicles or motorcycles used in racing competitions.

The tread 7 according to the present finding includes at least one first circumferential layer 11, located radially outside the overall structure of the tread 7 and at least one second circumferential layer 12, located in a radially inside position.

Said first circumferential layer 11 is made of a first elastomeric composition, which has excellent characteristics of adhesion to the ground and is able to achieve maximum efficiency at relatively low operating temperatures.

Said second circumferential layer 12 is made of a second elastomeric composition, with specific elasticity characteristics, in order to convey high mechanical characteristics to said first layer as well as a good resistance to wear of the same, during rolling on the ground.

Said one second elastomeric composition therefore has different characteristics from the first elastomeric composition.

In particular, the first elastomeric composition has a higher modulus of elasticity than the modulus of elasticity of the second elastomeric composition.

This way, the first layer 11, which timewise is intended to be the first tire rolling surface in contact with the ground, permits having an elastomeric composition which adheres perfectly to the latter, for example at an early stage of the competition.

The tread 7 to which this finding refers furthermore has a third circumferential layer 13, placed in an intermediate position between the first layer 11 and the second layer 12, made of a third elastomeric composition having a value of the modulus of elasticity intermediate between said moduli of elasticity of the first layer 11 and the second layer 12.

In a preferred embodiment, the elastomeric composition of said third circumferential layer 13 is a combination of the elastomeric compositions used to create the first layer 11 and the second layer 12.

As exemplified in figure 2, preferably said first layer 11 has a thickness whose height h₁ is greater than about 4 mm and less than about 8 mm.

Preferably said second layer 12 has a thickness whose height h₂ is greater than about 3 mm and less than about 5 mm.

Preferably said third layer 13 has a thickness whose height h₃ has a value between about 2 mm and about 3 mm. Even more preferably said third layer 13 has a thickness whose height h₃ has a lower value than both the height h₁ of the first layer 11 and the height h₂ of the second layer 12.

Preferably, at least one portion of said second layer 12 is in contact with said belt structure.

According to the present finding, it is possible to prepare a layering of at least three different elastomeric compositions arranged in such a way as to initially present a rolling surface consisting of a first layer 11 that allows better adherence to the ground; in successive phases, as a result of the progressive wear of the tread 7 during its use, the underlying layers (first the third layer 13 and then the second layer 12) constitute the rolling surface in contact with the ground, making it possible to have better performing elastomeric compositions with the increase of the operating temperature, and which are gradually more durable over time.

In a preferred embodiment, the tread 7 is substantially devoid of a tread pattern. Possible applications are, for example, so-called slick type tires, which are used for example in Formula 1 car racing.

The tire 10 to which this finding refers can be used not only in car racing but also in motorcycling competitions, even if these are held along tracks with a particularly tread wearing surface, under conditions that therefore require a change of tires during the course of the competition itself.

As can be seen from the above, the advantages of the invention are obvious.

The tire according to the present finding solves, in a simple and effective way, the problems related to the changing of tires during a competition, making it possible to reduce the number of changes needed and therefore the time devoted to these activities, improving the overall performance in the individual competition.

Although the finding has been described above with particular reference to one of its embodiments, given as an example only and not limited to such embodiment, many changes and variations will appear evident to an expert in the field in the light of the above description. The present finding, therefore, intends to embrace all the modifications and variations that fall within the spirit and protective scope of the following claims.

## Claims

1. Tire (10) comprising a carcass structure including one or more carcass plies (2) and having end flaps (3) opposite each other engaged in their respective anchoring annular structures (4), a belt structure applied radially outside the said carcass structure and a tread strip (7) radially positioned outside the said belt structure, **characterized by** the fact that said tread strip (7) comprises:
- at least one first circumferential layer (11), in radially outer position, made of a first elastomeric composition;
- at least one second circumferential layer (12), in radially inner position, made of a second elastomeric composition;
- a third circumferential layer (13) situated in an intermediate position between said at least one first layer (11) and said at least one second layer (12), made of a third elastomeric composition;
wherein the first elastomeric composition has a higher modulus of elasticity than the modulus of elasticity of the second elastomeric composition.

2. Tire according to claim 1, wherein said first layer (11) has a thickness whose height h₁ is greater than about 4 mm and less than about 8 mm.

3. Tire according to claim 1, wherein said second layer (12) has a thickness whose height h₂ is greater than about 3 mm and less than about 5 mm.

4. Tire according to claim 1, wherein said third layer (13) has a thickness whose height h₃ has a value between about 2 mm and about 3 mm.

5. Tire according to the preceding claim, wherein the third layer (13) has a thickness whose height h₃ is less than both the height h₁ of the first layer (11) and the height h₂ of the second layer (12).

6. Tire according to any of the preceding claims, wherein the tread is substantially devoid of a tread pattern.

7. Tire according to claim 1, wherein at least one portion of said second layer (12) is in contact with said belt structure.

8. Tire according to claim 1 designed to be fitted to racing vehicles or motorcycles.
